# EUROPEAN PATENT APPLICATION

(11) **EP 3 009 857 A1**
(43) Date of publication of application: **20.04.2016**
(21) Application number: 14382392.0
(22) Date of filing: 14.10.2014
(51) Int. Cl.: G01S 5/02

(54) **Method for improving location determination**

(71) Applicant: Vodafone IP Licensing Limited, The Connection Newbury Berkshire RG14 2FN (GB)
(72) Inventor: De Pasquale, Andrea, 28042 Madrid (ES); Domínguez Romero, Francisco, 28042 Madrid (ES); Turk, John, 28042 Madrid (ES)
(74) Representative: Boult Wade Tennant

(57) **Abstract**

A method for improving accuracy of estimation of a location of a mobile device, said mobile device registered with a network of a first operator, which comprises:
i) triggering the mobile device to measure RF signals broadcasted by one or more base stations of other operator(s);
ii) using said measured RF signals in estimating the location of the mobile device.

A method is also provided for determining by the mobile network of a first operator the location of a base station belonging to the network of a second operator, which comprises:
- by a network entity of the first operator, collecting a plurality of measurements of at least one RF frequency of the second operator reported by at least one mobile device registered with the mobile network of the first operator whose location is known or determinable using a location method; and
- estimating the location of said base station belonging to the network of a second mobile operator from said measurements of at least one RF frequency.

## Description

### TECHNICAL FIELD

The present invention relates to wireless networks and, more specifically, to methods for determining the location of a mobile station and/or a base station in a cellular network.

### STATE OF THE ART

Nowadays there are several methods which use information available within the network to generate an approximate location of a mobile device.

Many of these location systems are satellite-based (GPS, stand-alone or assisted), which are mainly employed for outdoor applications. The main drawbacks of these methods are mainly high power consumption, need for clearly receiving at least four satellite signals and the cost of integrating the GPS receiver in the mobile device.

Other locations systems are based on geometric techniques, which estimate the location of the mobile device by multilateration of radio signals between several base stations and the mobile device, or by triangulation of Time Of Arrival (TOA), Time Difference Of Arrival (TDOA), enhanced cell-ID or Uplink Time Difference Of Arrival (U-TDOA) measurements, or using the relationship between the received signal strength attenuation and the distance to base stations (RF propagation models).

These methods differ in terms of accuracy, coverage, cost, power consumption of the mobile device, etc. But the main problem is that their accuracy in certain situations -such as in urban environments where multipath is a relevant factor- is around 50-100 m in the best case.

In order to calculate the location of the mobile device (also referred to in the present text as user equipment, UE, user, user device, mobile station, mobile terminal or access terminal), each network operator uses the information of their own base stations. One of the main limitations of calculating the location of the mobile device is the limited number of signals from different base stations (also referred to in the present text as BS or sites) the mobile device (UE) can actually receive: the UE will receive signals from different sites, but the signal of the strongest cells will cover the signals from sites located faraway. Since each mobile operator network uses the same frequencies for all its sites, it is very difficult that the UE receives the signals from faraway sites without interference.

In some situations the UE receives just a few RF signals -such as the RF signal from one cell, or from two cells from the same site, or even signals from two different sites-, which is not enough for triangulating and obtaining an accurate location.

In some situations a location method based on signal propagation and/or GPS may not be accurate enough or simply not applicable.

The location estimation of the mobile device can be improved using database correlation methods or RF patterns matching methods: a database of location dependent parameters is constructed using RF measurements; later, the location of a mobile device is estimated by comparing its own RF measurements with entries in the database. For instance, European patent application published EP2154546A2 describes a method for determining the location of a mobile station having no dedicated external positioning systems (e.g. GPS), by using devices having GPS to create a matrix of recorded network radio parameters linked to positioning coordinates. The position of the mobile station is then estimated comparing its measured network radio parameters of the mobile station to those recorded in the positioning matrix.

Currently, once the network is operational, its optimisation is generally done by drive tests, which are costly and have to be carried out at different times to be able to predict the behaviour at different loads. In order to develop automated solutions, 3GPP Release-10 includes the feature Minimisation of Drive-Tests (MDT) which defines additional functionalities for both 3G and LTE networks, such as: automatic collection of UE measurements, data logging and in certain circumstances GPS-derived UE location. This can replace some manual drive tests that the operators have to perform in their networks, and can provide location information relevant to this invention.

### DESCRIPTION OF THE INVENTION

It is therefore an object of the invention to provide a method for estimating the location of a mobile device with increased accuracy.

According to an aspect of the present invention, there is provided a method for improving the accuracy of estimating a location of a mobile device, the mobile device being registered with a network of a first operator. The method comprises:
i) triggering the mobile device to measure RF signals broadcasted by one or more base stations of at least a second operator;
ii) using said measured RF signals in estimating the location of said mobile device.

The additional RF signals measured from at least a second operator provide an extra location estimate, which is used together with the other locations that the network of the first operator has already estimated from its own RF measurements to refine the final estimation of the location of the UE. Since there are more measurements, the accuracy of the estimation is improved.

In a preferred embodiment the location of said mobile device is estimated comparing the measured RF signals of the second operator with a collection of records corresponding to, for each frequency, RF measurements associated to a specific location where such RF measurements were taken. In this case, the final location is estimated using a correlation-type calculation.

The collection of records preferably comprises RF measurements reported by other mobile devices being capable of reporting GPS location information, so that the location information is accurate.

In another preferred embodiment, the estimation of the location of the mobile device from said measured RF signals is based on signal propagation from the one or more base stations of the at least one second operator. The location of the one or more base stations of the at least one second operator can be known or it can be determined applying any known location method to at least three measured signals for said base station.

The method of the invention preferably further comprises the step of storing the estimated location of the mobile device in a database which keeps the historic data of the locations of the mobile devices of the network, so as to keep historic track of the users.

In order to increase the collection of records -the more records it has, the more useful it will be, both in terms of higher probability that an RF measurement matches an entry in the collection, and in terms of providing finer resolution- the method further comprises the step of feeding the collection of records with the RF signals as measured by the mobile device in step i) correlated to the location of the mobile device as estimated in step ii).

Preferably, the RF measurements that are performed on the frequency or frequencies of the other operators are signal strength and signal to noise ratio.

A further aspect of the present invention refers to a method for determining by the mobile network of a first operator the location of a base station belonging to the network of a second mobile operator, which comprises:
- by a network entity of said first operator, collecting a plurality of measurements of at least one RF frequency of said second mobile operator reported by at least one mobile device registered with the mobile network of the first operator whose location is known or determinable using a location method; and
- estimating the location of said base station belonging to the network of a second mobile operator from said measurements of at least one RF frequency.

That is, according to the invention, a mobile device or multiple mobile devices are instructed to take a set of RF measurements of a base station belonging to a different operator, and these RF measurements are used to estimate to location of said base station, provided the location of the mobile device(s) is known.

The mobile device registered with the mobile network of the first operator can be located with the method for improved location of a mobile device defined in the foregoing.

If the location of the mobile device that provides the RF measurements is accurate -for instance, it has been reported by using GPS- the location estimation of the base station will also be accurate.

The plurality of measurements of at least one RF frequency of the second mobile operator can be taken by a plurality of mobile devices.

The location of the base station as estimated according to the method of the invention is preferably stored in a database, so that it can be used in the method for improved location of a mobile device previously defined using signal propagation methods.

According to a further aspect of the invention, a network entity belonging to the network of a first operator is provided, the network entity comprising:
- mobility management means configured for triggering at least one mobile device controlled by said network entity to measure RF signals broadcasted by one or more base stations of at least a second operator;
- receiving means for receiving the measured RF signals from the at least one mobile device; and,
- means for estimating the location of the mobile device and/or of the location of the base station broadcasting said RF signals based on said measured RF signals.

The network entity is preferably a RNC or a BSC or an eNB.

The invention further refers to a computer program comprising computer program code means adapted to perform the steps of the method as previously defined, when said program is run on a computer, a digital signal processor, a field-programmable gate array, an application-specific integrated circuit, a micro-processor, a micro-controller, or any other form of programmable hardware.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a data flow illustrating the method according to an embodiment of the invention.
Figure 2-3 show an example of how the location estimation of the UE can be improved with the additional RF measurements provided by the other operators.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings.

The present invention is applicable to wireless networks. In a particular embodiment, it is applicable to 3G and LTE wireless networks. The term "3G" refers to UMTS/WCDMA and includes HSDPA *(High Speed Downlink Packet Access)* (also referred to as 3.5G, 3G+ or mini 3G); HSUPA *(High-Speed Uplink Packet Access)* and HSPA+.

In order to solve the existing problem of obtaining an accurate location of the UE, the present invention provides a method for improving the accuracy in the estimation of the location of a mobile device, which is based on forcing the UE whose location is to be estimated to take measurements in frequencies from different PLMN-id (Public Land Mobile Networks).

According to the invention, the UE is used to obtain information not only from the BTSs (or nodes B (nB or enB)) of the network of a first operator with which it is registered, but also from the network of other operators. The UE can either periodically or when scheduled by the network of a first operator search for signals coming from other BTSs (or nodes B) of other operators in the same area but in different locations.

Thus according to the invention, a mobile device registered with the network of a first operator is triggered to measure RF signals broadcasted by one or more base stations of at least a second operator. These RF signals are received by an entity of the network of the first operator (for example, by the Radio Network Controller (RNC), Base Station Controller (BSC) or enhanced node B (eNB) in the case of LTE).

The measurement types that the mobile device can make on the RF frequencies of other operator are signal strength, signal to noise ratio, time difference of arrival, as per 3GPP 25.331 for 3G and 36.331 for 4G.

Additionally, the following information of the cell is also included in the information reported from the UE to the RNC: cell-id and Scrambling Code for 3G or physical cell identifier (PCI) for 4G of every cell.

Then, the entity of the network of the first operator uses said measured RF signals to improve the estimation of the location of the mobile device using a known location method:
- If the method for estimating the location of said mobile device is based on a DB correlation method or pattern matching method, then the measured RF signals are compared with the records comprised in a first database DB1. This first database DB1 comprises a set of records in which for each frequency, RF measurements are associated to a geographic location where such RF measurements have been previously taken by a mobile device, and are stored in this first database DB1. A correlation-type calculation is used to find the best match between the additional RF measurements from the BSs of the second operator and the entries of this first database DB1.

The data contained in this first database DB1 can be built using any location dependent parameter available in the network, such as signal strength values or propagation time delays. At least a single location dependent parameter per cell or per BS has to be matched with a specific location, or several different parameters can be stored, the corresponding database becoming multidimensional.

The first database DB1 can be constructed using field measurements or using radio wave propagation prediction tools.

An example of an entry in this first database DB1 can be: location coordinates (such as latitude and longitude), and, per each cell predicted or measured signal strength at that location.

There are several known ways of implementing the correlation-type calculation for finding the best match between the additional RF measurement from the BSs of the second operator and the entries of this first database DB1. For example, one way is described in patent application published EP-2154546-A1 by the same applicant, which is based on a positioning matrix which is built with radio parameters provided by mobile stations whose location is determined with the aid of an external positioning system, such as GPS. The position of the mobile station can then be estimated by determining the vector of radio parameters that has the minimum algebraic distance to the measured radio parameters and estimating the position of the mobile station to be at the positioning coordinates corresponding to the closest vector. Other appropriate examples are well known in the art.

Depending on the specific correlation-type algorithm used, the location estimate is provided with higher or lower level of certainty, but a location estimation is always given.

The additional location estimation in conjunction with other available location estimations of provides a more accurate location estimation of the UE, because of the increased diversity of reference points in the database. Having more measurements also facilitates rejecting clearly erroneous measurements which would otherwise cause large errors in the location estimate.

For example, prior to the new measurements provided by the other operators, the first database DB1 may contain the following entries:
(lat1, long1) = (cell-idₓ RSCPₓ EcNoₓ)
(lat2, long2) = (cell-idₓ RSCPₓ EcNoₓ)

So the database DB1 contains two different locations with the same signal level (RSCP) and signal to noise ratio (EcNo) from the same cell (cell-idₓ). The location in this case would have an uncertainty area of at least the distance between these two points (lat1, long1), (lat2, long2).

Now once the RF measurements from other operators have been taken and introduced in the first database DB1, the entries of those two points would also have the following information:
(lat1, long1) = (cell-idₓ RSCPₓ EcNoₓ, Cell-id(op B)_{y} RSCPₙ EcNoₙ)
(lat2, long2) = (cell-idₓ RSCPₓ EcNoₓ, Cell-id(op B)_{y} RSCPₘ EcNoₘ)

So the two points no longer have the same RF measurements from the same cell. In this latter case, the different signal levels from the Operator B added to each of the points can allow to find the location estimation with a better accuracy than in the previous case.
- If the method for estimating the location of said mobile device is based on signal propagation from the BS -such as received signal strength or signal time of propagation-, the location of the mobile device is improved since at least a further location can be estimated with the additional RF measurements from the second operator, provided that the location of one or more base stations of the at least one second operator is known.

The location of the BSs of the second operator can be known because drive tests have been carried out beforehand by the first operator and the results of these tests has been stored. Or they can be known since in some countries the location of the BSs is publicly available. Alternatively, there might not be accurate information of the location of the BSs of other operators. In such case, the location of the BSs can be obtained in accordance with the invention by triggering a single mobile device at different times or different mobile devices, to take RF measurements from at least a BS of the second operator whose location wishes to be known. Using a known location method -such as multilateration- the location of the BS can be determined, provided the location of the mobile device(s) which have reported the measurements is known. Even if the real location of the UEs is not very accurate when taking the RF measurements, after a number of samples (from hundreds or thousands of different UE in a given area), it is easy to calculate the real location originating the RF signal.

With this information of the location of the BSs of the other operators, the first operator feeds and maintains a second database DB2.

Once the location of the BS of the other operators is known, it is then possible to use that information for locating a mobile device which has been triggered to take RF measurements in a frequency radiated by that BS according to the invention.

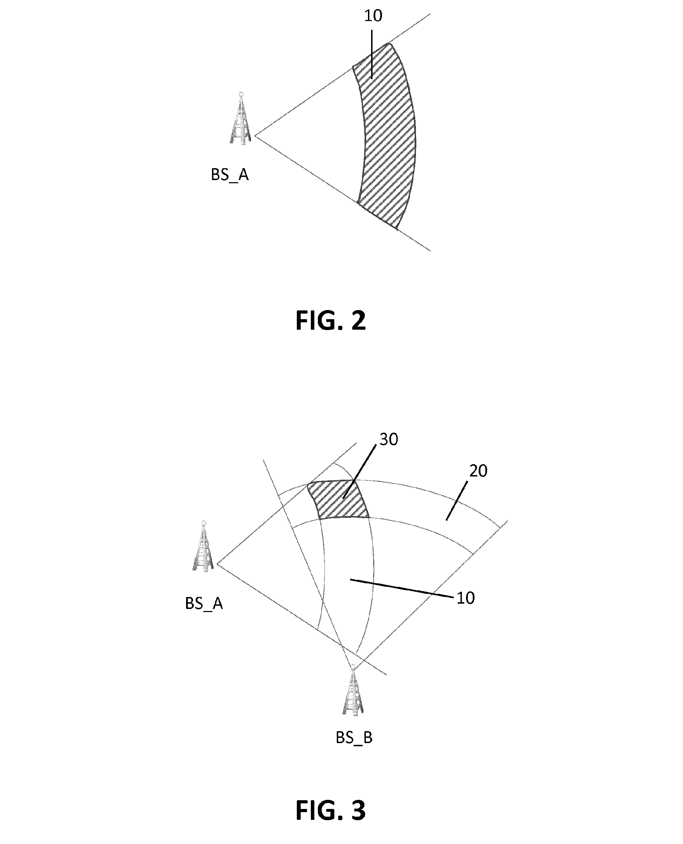

Figure 2 shows an example where the UE has just detected one cell of the own operator in the measurement reports:
Measurement Report = (cell-idₓ RSCPₓ EcNoₓ)

Using a known radio propagation method calculation, the location estimation of the UE would be the arcuate area 10 which corresponds to the signal level from the base station BS_A.

As shown in Figure 3 the additional RF measurements from the base station BS_B of another operator provides another location area 20 where the UE can be located. The final location estimation is provided by the intersecting area 30, which also improves the accuracy of the location estimation.

In either case, the additional RF measurements from the other operators provide an additional location estimate, which is used with the other location estimates to improve the estimation of the location of the UE, thereby improving the accuracy of the location estimation: the more measurements, the better estimation.

The result of the location estimation of the mobile device is stored in a third database DB3, which keeps the historic data of the locations of all the mobile devices of the network.

Before the mobile device is triggered to measure RF signals broadcasted by other operators, a list of the target frequencies of other operators is created. In the particular example of the 3G technology, the RNC informs the mobile device in the Measurement Control message about the amount and value of frequencies of other operators -as indicated in the list- so that the mobile device takes the RF measurements.

For example, in the band of 2100 MHz, each mobile operator is assigned 3 or 4 frequencies. Thus, the network (for example, RNC) informs the mobile device (UE) which is going to take the measurements about the target frequency or frequencies whose RF measurements have to be taken. When the UE detects cells of that target frequency or frequencies, then it reports to the network (for example, RNC) the following information of the detected cells: cell-id and Scrambling Code for 3G, or physical cell identifier (PCI) for 4G of every cell together with the RF measurements: signal strength and/or signal to noise ratio (RSCP, RSSI and EcNo for UMTS).

The 3GPP specifications applicable to 3G and LTE provide several functionalities for managing the relation between neighbour cells, such as the Automatic Neighbour Relation (ANR), whose purpose is to relieve the operator from the burden of manually managing Neighbour Relations (NRs). This feature eases the managing and provisioning of neighbour cells within a network operator.

For example, in LTE, the ANR functionality resides in the eNB and manages a conceptual Neighbour Relation Table (NRT). A Neighbour cell Relation (NR) from a source cell to a target cell means that the eNB controlling the source cell knows the eCGI (E-UTRAN Cell Global Identifier) and the Physical Cell Identifier (PCI) of the target cell and has an entry in the NRT for the source cell identifying the target cell. For each cell that the eNB has, the eNB keeps an NRT. The serving cell of an eNB having the ANR function can instruct the UE to perform measurements and detect cells on other RATs (Radio Access Technologies) or frequencies.

So this functionality, that requires little operator effort, can be used in the present invention for easily detecting the cell-ID of other operators.

These pieces of information of RF signals measured on each frequency matched to the corresponding location where they were taken are continuously stored in the first database DB1. The more entries the database contains and the more quantity of RF data in each entry, the finer the estimation will be.

So the more operators are measured, the most accurate the location calculation will be. In case there is a maximum limit in the frequencies to be measured by a specific UE, it is better to choose at least one frequency for every operator of the country since they can be in different BSs, and then there is more diversity in the triangulation positioning calculation.

The cells detected from other operators will not be used to decide a handover to them. So even if the UE detects a very strong signal from a BS of another operator, it is ignored in the RNC for handover purposes: the information provided by those cells is just used to calculate the location of the UE.

The different databases used in the present invention can be kept either at the network entity itself (RNC, BSC or e-node B) or in a separate entity, such as a server having an interface connection with the network entity itself.

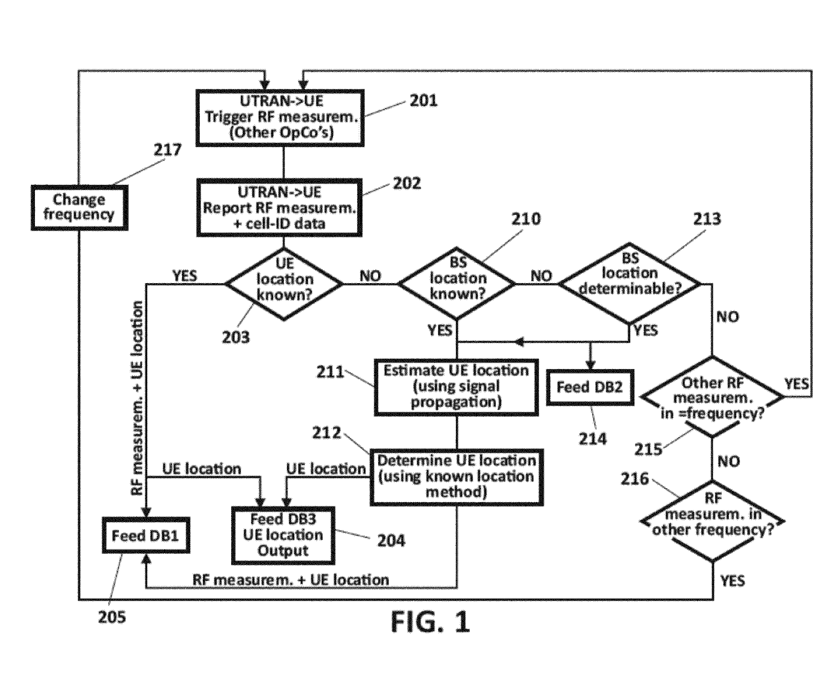

Next, a possible embodiment of the inventive method is described, in relation to the data flow of Figure 1.

First (box 201), the UE is triggered to take RF measurements on the target frequency or frequencies belonging to other operators as contained in the list. A network controller performs such triggering by indicating the UE in the Measurements Control message to take measurements in the corresponding frequency or frequencies.

As indicated above, when the UE detects cells of that target frequency or frequencies, then it reports to the network (box 202) for example, to the RNC or another UTRAN entity, the following information of the detected cells: cell-id and Scrambling Code for 3G or physical cell identifier (PCI) for 4G of every cell, together with the RF measurements: signal strength and/or signal to noise ratio (RSCP, RSSI and EcNo for UMTS).

At this stage, it is verified whether or not the location of the mobile device is known (box 203).

The location of the mobile device which performed the measurements can be known if it has GPS capabilities and they are activated. In 3GPP Release-10 it is possible to ask the UE in UMTS and LTE to report its GPS location information if available. This GPS location information can be sent if the RNC/eNB orders this in the Measurement Control message. In order to minimise battery consumption, the 3GPP specifies to report such GPS location information only when the UE is using the GPS for any other application at higher layers.

Or the location of the mobile device can also be reported by the mobile device as part of 'Measure Position Response' which is sent by the UE in response to the Measure Position Request by the network (3GPP Release-10), and contains one of the five elements containing measurement data or location estimate (E-OTD Measurement Information, Location Information, GPS Measurement Information, GANSS Measurement Information or GANSS Location Information). 3GPP Release-11 further includes the possibility of asking the UE to report the location when measuring other RATs.

So if the mobile device has its GPS capabilities and they are activated, then the GPS has captured a location. The location of the UE in this case is directly the location indicated by the GPS, which is reported to the network controller. The location information of the UE is then sent (box 204) as output to the third database DB3, which keeps record of the results of the location of the users.

Additionally, the location information of the UE is also sent (box 205) to the first database DB1, where it is stored matched to the RF signals as measured, thereby feeding the database DB1 and increasing its granularity.

As mentioned before, the GPS location is only reported when the UE is using the GPS for any other application at higher layers. In any case, there is enough information in this respect to feed and build the first database with all the occurrences of the GPS activation in today Smartphones.

If, on the contrary, there is no GPS information (either because the mobile device does not have a GPS, or because this is not activated, or because the GPS has been unable to capture a location), a further verification is made to determine whether the location of the BS radiating the RF measurements is known or not (box 210).

If the location of the BS of the second operator is already known, then an estimation of the location of the mobile device is done (box 211) using a known signal propagation method, determining for instance that the mobile device is in located within an area *aᵢ*. The network controller feeds this location estimation *aᵢ* into a known location method (212) -such as pattern matching or signal propagation- which also receives other location estimations *aⱼ*, *a_{k,}*, ..., the additional location estimation *aᵢ* improving the final location estimation of the UE, which can be provided as an area *A*, which will be an intersection of the input areas, and therefore smaller. The final estimation of the location of the UE is provided as output and also fed to the third database DB3. As in the previous case, the location information of the UE is also sent (box 205) to the first database DB1, where it is stored matched to the RF signals as measured, thereby feeding the database DB1 and increasing its granularity.

On the contrary, if the location of the BS of the second operator is not known, then the location of the BS can be inferred with several pairs of location/RF measurements taken from that BS, using first signal propagation to obtain an approximate BS location and then combining the different pairs (e.g, by triangulation) to estimate the BS location. There are known propagation models, which include the corrections and deviations, so having the location and signal level of many samples, it can be calculated where the signal was transmitted from.

In accordance with the invention the location of the BS is obtained by triggering at least a mobile device to take a plurality of RF measurements at least one frequency from the BS of the second operator whose location wishes to be known.

The plurality of RF measurements at least one frequency can be taken by a single mobile device (at different times and known positions), or by several mobile devices (also at known positions).

So it is checked whether with the RF measurement of the other operator reported by the UE is possible to estimate the location of the BS (box 213), in which case, the location of the BS of the other operator is determined and the method proceeds on box 211. Additionally, the location of the BS is stored in the second database DB2 (box 214).

Otherwise (there are not sufficient RF measurements) it is checked (box 215) whether other RF measurements in the same frequency are available, in which case the loop restarts and the UE is triggered (box 201) to take such additional measurements in the same frequency. Else, it is checked whether RF measurements in all the target frequencies have been reported (box 216). In the affirmative, the UE is ordered to change to another frequency (box 217) of the list of target frequencies in order to obtain at the network controller new measurements reports, and the loop restarts (box 201).

As shown in the Figure, each time the location of the mobile device is estimated, that specific location is sent as output and stored in the third database DB3 (box 204). Also, the location paired with the corresponding RF measurements is stored in the first database (box 205).

The process may continue until it is decided that the number of RF measurements is enough to get a location estimation with enough accuracy, which will depend, for instance, on whether it is an urban o rural environment).

With the described method for determining the location of a mobile device, a more accurate result can be obtained because additional location information can be obtained from the RF measurements of the other operators. As a consequence, a better triangulation and then a higher accuracy of the location of the mobile device is achieved.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Please note that in this text, the term "comprises" and its derivations (such as "comprising", etc.) should not be understood in an excluding or limiting sense (such as "consists of"), that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

## Claims

1. A method for improving accuracy of estimation of a location of a mobile device, said mobile device registered with a network of a first operator, **characterized in that** it comprises:
i) triggering the mobile device to measure RF signals broadcasted by one or more base stations of at least one second operator;
ii) using said measured RF signals in estimating the location of said mobile device.

2. The method of claim 1, wherein said estimation of the location of said mobile device comprises comparing (209) the measured RF signals with a collection of records (DB1) corresponding to, for each frequency, RF measurements associated to a specific location where such RF measurements were taken.

3. The method of claim 2, wherein said collection of records comprises RF measurements reported by other mobile devices being capable of reporting GPS location information.

4. The method of claim 1, wherein said estimation of the location of the mobile device from said measured RF signals is based on signal propagation from the one or more base stations of the at least one second operator.

5. The method of claim 4, wherein the location of the base station of the at least one second operator is known or determined applying any known location method to at least three measured signals for said base station.

6. The method of any preceding claim, further comprising the step of storing (204) the estimated location of the mobile device in a database (DB3) which keeps the historic data of the locations of the mobile devices of the network.

7. The method of any of claims 2-3 and 6, further comprising the step of feeding (205) the collection of records (DB1) with the RF signals as measured by the mobile device in step i) correlated to the location of the mobile device as estimated in step ii).

8. The method of any preceding claim, wherein the RF signals measured on the at least one second operator are signal strength and/or signal to noise ratio.

9. A method for determining by the mobile network of a first operator the location of a base station belonging to the network of a second mobile operator, **characterized in that** it comprises:
- by a network entity of said first operator, collecting a plurality of measurements of at least one RF frequency of said second mobile operator reported by at least one mobile device registered with the mobile network of the first operator whose location is known or determinable using a location method; and
- estimating the location of said base station belonging to the network of a second mobile operator from said measurements of at least one RF frequency.

10. The method of claim 9, wherein the mobile device registered with the mobile network of the first operator is located with the method of any of claims 1-7.

11. The method of either claim 9 or 10, wherein said plurality of measurements is taken by a plurality of mobile devices.

12. The method of any claims from 9 to 11, further comprising the step of storing the estimated location of the base station in a database (DB2).

13. A network entity belonging to the network of a first operator, **characterized in that** it comprises:
- mobility management means configured for triggering at least one mobile device controlled by said network entity to measure RF signals broadcasted by one or more base stations of at least a second operator;
- receiving means for receiving the measured RF signals from the at least one mobile device;
- means for estimating the location of the mobile device and/or of the location of the base station broadcasting said RF signals based on said measured RF signals.

14. The network entity of claim 13, which is a RNC or a BSC or an eNB.

15. A computer program comprising computer program code means adapted to perform the steps of the method according to any claims from 1 to 12 when said program is run on a computer, a digital signal processor, a field-programmable gate array, an application-specific integrated circuit, a micro-processor, a micro-controller, or any other form of programmable hardware.
